# EUROPEAN PATENT APPLICATION

(11) **EP 0 687 977 A2**
(43) Date of publication of application: **20.12.1995**
(21) Application number: 95303817.1
(22) Date of filing: 05.06.1995
(51) Int. Cl.: G06F 11/32

(54) **Console facility for a computer system**

(30) Priority: 18.06.1994 GB 9412264
(71) Applicant: INTERNATIONAL COMPUTERS LIMITED, Putney, London, SW15 1SW (GB)
(72) Inventor: Davis, Andrew Royston, Woodenhill, Bracknell RG12 8WT (GB); Gold, Stephen, Camberley, Surrey (GB); Tarpey, Andrew, Winnersh, Berkshire RG11 5JF (GB)
(74) Representative: Guyatt, Derek Charles

(57) **Abstract**

A console facility is provided for a computer system. The system consists of at least one cabinet including a number of components such as cooling fans, temperature sensors, and power supplies. The components are monitored to produce status and error information associated with those components, and a graphical display is generated on a display console. The display includes a graphical representation of the components and their physical locations within the cabinet, and displays the status and error information associated with each component. The graphical display includes a number of views, representing the cabinet when viewed from different angles.

## Description

### Background to the Invention

This invention relates to console facilities for computer systems.

It is well known to use a display terminal as a console for a computer system, to display information on the internal status of the system. Such information may, for example, be displayed in tabular form, as a listing of the status of individual components of the system. A problem with such arrangements is that the displayed information is generally inconvenient and difficult to understand.

The object of the present invention is to provide an improved console facility for a computer system in which such hardware status information is displayed in a more convenient and more readily understandable form.

### Summary of the Invention

According to the invention there is provided a computer system comprising:
(a) at least one cabinet including a plurality of components,
(b) means for monitoring the components to produce status and error information associated with those components,
(c) a display console, and
(d) means for generating a graphical display on the display console, the display including a graphical representation of the components and their locations within the cabinet, and displaying the status and error information associated with each component.

### Brief Description of the Drawings

Figure 1 is a block diagram of a group of computers.

Figure 2 is a block diagram showing a cabinet forming part of one of the computers.

Figure 3 is a block diagram showing of an "oBase" package which runs on each computer.

Figure 4 is a block diagram of an "obServer" package that interacts with the "oBase" packages to provide console facilities for the system.

Figure 5 shows a typical graphical display produced by the system.

### Description of an Embodiment of the Invention

One embodiment of the invention will now be described by way of example with reference to the accompanying drawings.

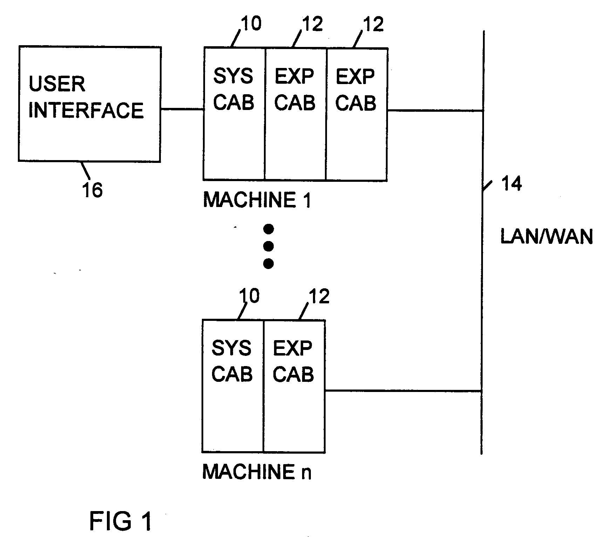

Figure 1 shows a computer system, comprising a group of machines (i.e. computers), each of which comprises a system cabinet 10 and optionally one or more expansion cabinets 12. The machines are interconnected by a network 14 which may be a LAN (local area network) or WAN (local area network). The network 14 may comprise, for example, any standard network such as Ethernet, X25, or RS232, or may include a modem connection. At least one of the machines has a user interface 16, comprising a conventional graphics terminal, keyboard, and mouse (or other pointer device).

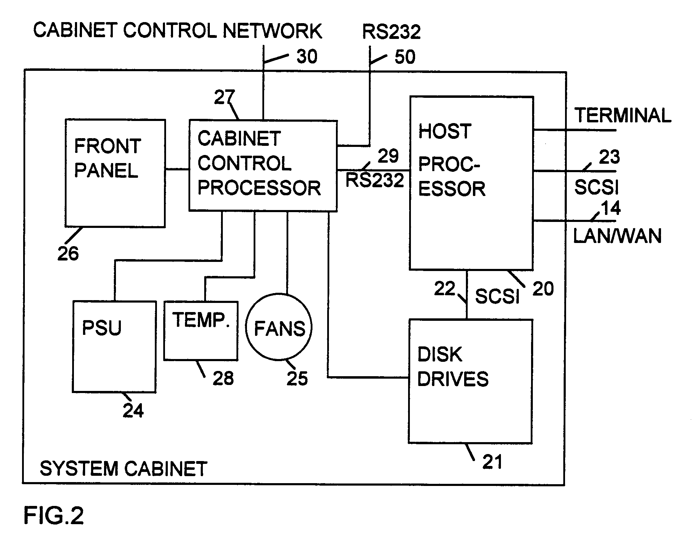

Figure 2 shows one of the system cabinets in more detail. Each system cabinet houses a host processor 20, and a number of disk drive units 21, connected to the host processor by way of a SCSI (Small Computer System Interface) bus 22. The expansion cabinets are similar, but instead of a host processor, contain further disk drive units or other mass storage devices, such as optical disk drives. The devices in the expansion cabinets are connected to the host processor by way of further SCSI busses 23.

Each cabinet contains one or more power supply units (PSU) 24, which may include an uninterruptable power supply (UPS), i.e a battery-backed unit. Each cabinet also contains a number of cooling fans 25, mounted in trays within the cabinet. Each cabinet also has a front control panel 26 which includes a number of lights for indicating system activity (e.g. power on; disk drive operation). The control panel on the system cabinet also includes a multi-position keyswitch, for switching the system into one of a number of states (e.g. off, on, supervisor, standby), and RESET and DUMP buttons.

Each cabinet also contains a cabinet control processor 27, whose function is to monitor and control the status of various components in the cabinet. The cabinet control processor is connected to temperature sensors 28, which monitor the temperature at various points in the cabinet, to the cooling fans, so as to monitor the rotation of the fans, and to the power supply units, so as to monitor the operation of those units. The cabinet control processor also senses the positions of the switches on the control panel, and controls the lights on the panel.

The cabinet control processor in the system cabinet is linked to the host processor by an RS232 link 29. It is also linked to the cabinet control processors in the expansion cabinets of the same machine by means of a cabinet control network 30.

The cabinet control processor in the system cabinet acts as a master in this network, while those in the expansion cabinets act as slaves. The master and slave processors each gather information on the status of the various components in their own cabinets, and the master has the additional responsibility of collecting this status information from the slave processors, and communicating this information to a console facility, to be described. This network of cabinet control processors is referred to herein as the cabinet control system (CCS).

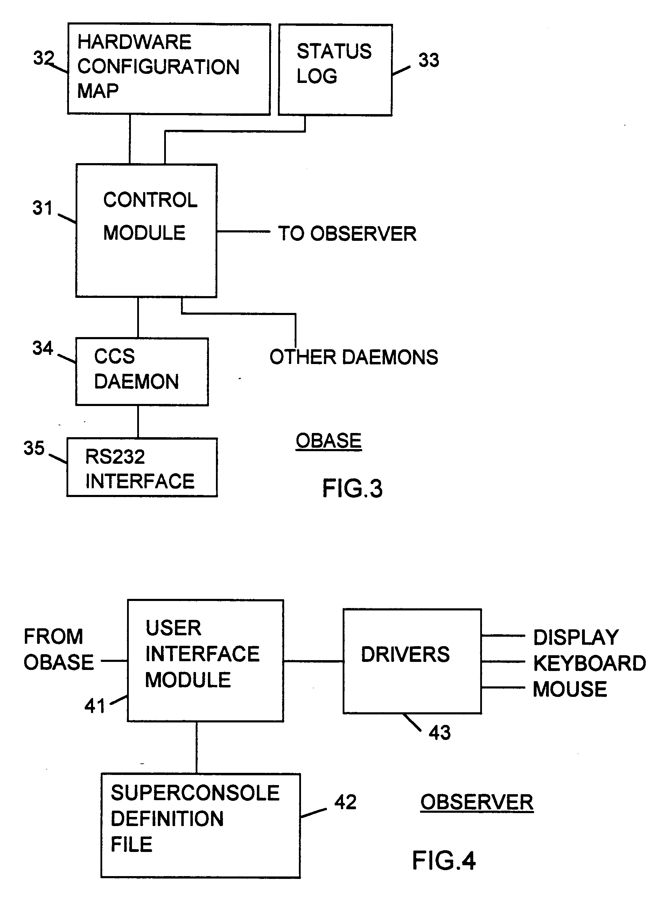

Figure 3 shows a software package referred to herein as "oBase". This package runs on each host processor in the system. The oBase package includes a control module 31, a hardware configuration map (HCM) 32, a status log 33, a CCS daemon 34, and a RS232 interface 35. The oBase also includes other hardware-specific daemons (not shown), such as a SCSI RAID daemon.

The HCM is a text file and contains full configuration information on all the components of the system, including cabinets, plug-in boards, power supply units, fans and peripherals. The HCM also stores historical information, indicating what hardware modifications have been made to the system, when the changes were made, and the reasons for the changes.

Figure 4 shows a software package referred to herein as "obServer". In the present example, obServer runs on the host processor of one of the machines in the system, and cooperates with the oBase packages in the individual host processors to provide console facilities for all the machines. However, in other embodiments of the invention, obServer may run on more than one machine, or may run on a separate diagnostic or administrative computer. The host processor on which the obServer runs must have a user interface 16 including graphics terminal, keyboard and mouse.

The obServer package includes a user interface module 41, a superconsole definition file (SDF) 42, and driver software 43 for communicating with the user interface 16.

The user interface module 41 is responsible for all display and user interaction. When the user interface module starts up, it initially displays a top-level control window. This window contains a set of machine icons, one for each machine in the system. These machine icons are arranged in a vertical column, at the left hand side of the window. Each machine icon is labelled with the name of the machine it represents. A row of one or more cabinet icons is displayed to the right of each machine icon, representing the cabinets that make up each machine. Each cabinet icon is labelled with a cabinet number.

Any one of the machine or cabinet icons can be selected, using the mouse. When a machine or cabinet icon is selected, details of the machine or cabinet are displayed in a status line at the bottom of the window. The selected icon can then be opened, using an option on a menu bar.

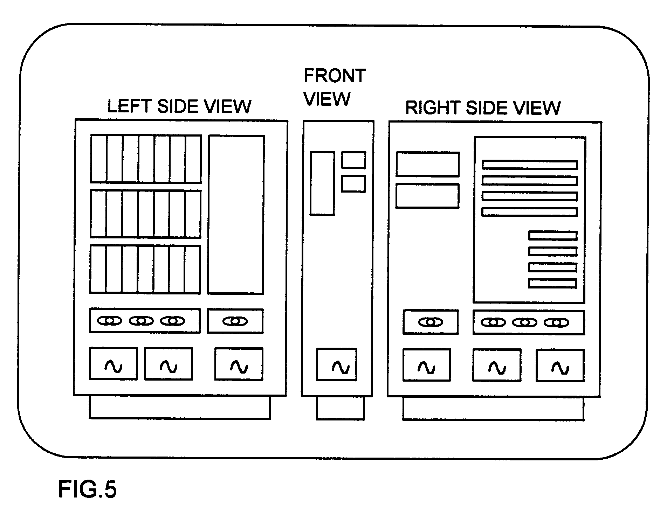

When a cabinet icon is opened, the user interface module displays a component window for the selected cabinet. The component window is a graphical representation of the selected cabinet, showing left side, front, and right side views of the cabinet. Each of these views contains a number of pictures, representing individual components within the cabinet, and the locations of those components. For example, as shown in Figure 5, the views may contain pictures representing power supply units, cooling fans, disk drive units, a processor board, and a front panel. It should be noted that it is possible for a component to appear in more than one view. Any one of these components can be selected, by clicking on it with the mouse. When a component is selected, details of it are displayed in the status line.

The control window and component window both include a menu bar containing a number of menus. These include a Selected menu, which contains a context-sensitive list of actions appropriate to the currently selected machine, cabinet or component. These actions include the following:
**func_desc** This requests the console facility to display, in a text window, type information and a functional description of the selected machine, cabinet or component.
**tech_spec** This requests the console facility to display a technical specification of the selected machine, cabinet or component.
**serv_logs** This requests the console facility to display a service history of the selected machine, cabinet or component.
**curr_stat** This requests the console facility to display the current status of the selected machine, cabinet or component, including any current errors.
**temp_grph** This requests the console facility to display a graph, showing the readings from a specified temperature sensor over the last 24 hours.

When one of these actions is selected by the user, the user interface module sends an action message to the oBase package in the selected machine, specifying the required action and identifying the currently selected machine, cabinet or component. This message is received by the oBase control module, which performs the specified action. If the action is successful, the control module returns an ACTION_RESULT message to the user interface module, including the requested data. The user interface module then displays this data in a text window. If, on the other hand, the action is not successful, the control module returns an ACTION_ERROR message, which causes the user interface module to display an error window, indicating that the action failed to complete successfully.

The information used to construct the displays for the user interface module is held in the SDF 42. This file initially contains the following information;
- The complete set of actions that can be requested by the user.
- The set of machine types that can be handled by the obServer. For each machine type, the file holds a list of valid actions that can be requested for it, and the types of cabinet that it can contain.
- The set of cabinet types that can be handled by the obServer. For each cabinet type, the file contains a list of the valid actions that can be requested for it, and the window type that is to be used for displaying it.
- A set of window types. For each window type, the file holds a list of views it contains, and the positions where component pictures can be positioned in the window.
- A set of component types. For each component type, the file holds a list of the valid actions that can be requested for it, and a definition of the picture that is used to represent the component.

When each oBase control module is started up, it accesses its HCM to find out the current hardware configuration of the local machine. If the HCM is not present, the control module runs in a degraded mode, and cannot drive the user interface module. Assuming that the HCM is present, the control module then sends a sequence of messages to the obServer user interface module, instructing it to add specified machines, cabinets and components to the SDF, as follows.

First, the control module sends a READ_DEF message to the user interface module, specifying the machine type. The user interface module accesses the SDF, to obtain the definition of the machine type. The control module then sends an ADD_MACH message to the user interface module, supplying the name of the machine to be created. When it receives this message, the user interface module creates a record for the machine in the SDF.

Next, for each cabinet within the machine, the control module sends a READ_DEF message to the user interface, specifying the cabinet type. The user interface module accesses the SDF to obtain the definition of the cabinet type. The control module then sends an ADD_CAB message to the user interface module, supplying the name of the machine in which the cabinet resides, and the cabinet number. When it receives this message, the user interface module creates a record for the cabinet within the SDF.

Next, for each component in each cabinet, the control module sends a READ_DEF message to the user interface, specifying the component type. The user interface module accesses the SDF to obtain the definition of the component type. The control module then sends an ADD_COMP message to the user interface module, supplying the name of the machine and cabinet in which the component resides, and the position of the component within this cabinet. When it receives this message, the user interface module creates a record for the component within the SDF.

When this process is complete, the control module sends an INIT_DONE message to the user interface module. The SDF now contains complete information to enable the user interface module to produce the component window displays, indicating the actual configuration of the system. If at any time the control module detects that a component, cabinet, or machine has been removed from the system, it sends a REM_COMP, REM_CAB or REM_MACH message to the user interface module, instructing it to remove the appropriate component, cabinet or machine record from the SDF.

The control module interfaces with the CCS in the local machine by way of a CCS daemon. When the CCS detects some event in the machine, it sends an unsolicited message, referred to as an asynchronous event notice (AEN) to the CCS daemon, over the RS232 link. The events that give rise to an AEN include:
- change of state of the keyswitch on a cabinet control panel
- operation of the dump button
- operation of the reset button
- opening or closing of a cabinet door
- cabinet overheating
- power supply failure
- fan failure
- mains supply failure
- hot-swap of disk drive.

When the CCS daemon receives the AEN, it sends a CCS_CHANGE message to the control module, to report the change of state. The CCS_CHANGE message includes parameters indicating the cause of the AEN, and the identity of the cabinet in which the event occurred. The control module then sends a message back to the CCS daemon, requesting more information on the event. The CCS daemon then returns the requested information.

For example, if the CCS_CHANGE message indicates fan failure, the control module sends a GET_FANS message, requesting more information on the cooling fans in a specified fan tray. The CCS daemon responds to this message by returning two parameters for each fan in the fan tray, indicating the identity of the fan and its state (failure or no failure). Similarly, if the CCS_CHANGE message indicates power supply failure, the control module sends a GET_PSU message, requesting more information on the power supply units in a specified cabinet. The CCS daemon responds to this message by returning two parameters for each power supply in the cabinet, indicating the identity of the power supply and its state (failure, no failure or overheated).

When the oBase control module receives this information from the CCS daemon, it uses the information to update the status log, which contains a record of the current state of the machine. The control module also records all hardware faults in the error log. As well as current faults, the error log holds a history of previous faults, and a summary of the temperature readings over the last 24 hours.

If the received information indicates a new hardware fault (e.g. fan or power supply failure), the control module sends a COMP_ERROR message to the user interface module to inform it of the fault. The message contains the machine name, cabinet number, and component name, identifying the affected component. The user interface module then updates the SDF, so as to change the normal picture for the component to an "error" picture for that component. The error picture may, for example, be distinguished from the normal picture by being a different colour.

Similarly, if the oBase control module detects that a hardware fault has been removed, it sends a COMP_OK message to the user interface. The message contains the machine name, cabinet number, and component name, identifying the affected component. The user interface module then updates the SDF, so as to change the error picture for the component back to the normal picture for that component.

When the oBase control module receives an action message from the obServer, it consults the HCM, the status log, and the error log to obtain the requested information. If the information is available, the control module returns an ACTION_RESULT message containing the requested information. If, on the other hand, the requested information is not available, the control module returns an ACTION_ERROR message.

In the embodiment described above, obServer resides on the host processor of one of the machines. It communicates directly with the local oBase in the same host processor, and communicates with the oBase in each of the other machines by way of the LAN/WAN, and thus provides console facilities for all the machines in the system.

In other embodiments of the invention, obServer may reside in the host processors of two or more machines. In this case, each obServer may be responsible for communicating with the oBase in one machine or a predetermined group of machines.

Alternatively, or additionally, obServer may run on a special administrative computer, connected to the LAN/WAN, or on a diagnostic computer, connected to the cabinet control processor in one of the system cabinets by way of an additional RS232 link 50.

In conclusion, it can be seen that the obServer, in conjunction with the oBase packages, provides the user with an accurate, detailed graphical view of all the hardware installed in the system, as well as technical specifications of all the hardware. The user is also provided with a real-time graphical display of the hardware status, rather than operating system level subsystem status. The obServer is capable of running on a remote system, thus allowing hardware administration of multiple machines from one terminal. It also provides the user with the ability to request detailed error or status information, including historical error logs for any piece of hardware in the system. The obServer is independent of the hardware architecture of the system. It also allows for additional modules to be added in the future, allowing further actions to be performed on the hardware subsystems, such as hardware configuration or diagnostics.

## Claims

1. A computer system comprising:
(a) at least one cabinet including a plurality of components,
(b) means for monitoring the components to produce status and error information associated with those components,
(c) a display console, and
(d) means for generating a graphical display on the display console, the display including a graphical representation of the components and their locations within the cabinet, and displaying the status and error information associated with each component.

2. A system according to Claim 1 wherein the graphical display includes a plurality of views, representing the cabinet when viewed from different angles.

3. A system according to Claim 1 or 2 including selection means for selecting one of the components from the graphical display, and for opening a window displaying information relating to the selected component.

4. A system according to any preceding claim wherein the components within the cabinet include cooling fans, temperature sensors, and power supplies.

5. A computer system comprising:
(a) a plurality of computers, each computer comprising at least one cabinet including a plurality of components,
(b) means for monitoring the components to produce status and error information associated with those components,
(c) a display console,
(d) means for selecting any cabinet within any of the computers, and
(e) means for generating a graphical display on the display console, the display including a graphical representation of the components and their locations within the selected cabinet, and displaying the status and error information associated with each component.
